(19)

Europäisches
Patentamt
European
Patent Office
Office européen
des brevets

(11) **EP 4 636 708 A1**

(12) **EUROPEAN PATENT APPLICATION**
published in accordance with Art. 153(4) EPC

(43) Date of publication:
**22.10.2025 Bulletin 2025/43**

(21) Application number: **23901984.7**

(22) Date of filing: **23.04.2023**

(51) International Patent Classification (IPC):
*G06V 10/764* (2022.01)

(52) Cooperative Patent Classification (CPC):
**G06N 3/0464; G06N 3/08; G06V 10/764;**
**G06V 10/82;** Y02T 10/40

(86) International application number:
**PCT/CN2023/090036**

(87) International publication number:
**WO 2024/124770 (20.06.2024 Gazette 2024/25)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **16.12.2022 CN 202211626780**

(71) Applicant: **Unidt (Shanghai) Co., Ltd.**
**Shanghai 200040 (CN)**

(72) Inventors:
• **WANG, Xiaomei**
**Shanghai 200040 (CN)**
• **LU, Yunhong**
**Shanghai 200040 (CN)**

(74) Representative: **Cabinet Le Guen Maillet**
**3, impasse de la Vigie**
**CS 71840**
**35418 Saint-Malo Cedex (FR)**

(54) **MULTI-LABEL IMAGE CLASSIFICATION METHOD AND APPARATUS, AND MULTI-LABEL IMAGE CLASSIFICATION MODEL TRAINING METHOD AND APPARATUS**

(57) Disclosed in the present invention are a multi-label image classification method and apparatus, and a multi-label image classification model training method and apparatus. The model training method comprises: acquiring training samples; acquiring semantic features of label sets; inputting sample images and the semantic features into a multi-label image classification model, acquiring visual features from the sample images, obtaining the correlations between the sample images and the label sets on the basis of a comparison learning network, and on the basis of a fully-connected network, obtaining prediction results of the sample images mapped to classification labels; constructing a correlation matrix and a unit matrix; and calculating target loss on the basis of the correlation matrix, the unit matrix, the prediction results, and the corresponding classification labels, and adjusting parameters of the multi-label image classification model until a convergence condition is met. According to the present invention, semantic information in labels is utilized, and in addition to training of prediction results of the labels corresponding to image information, the correlation between the image information and the semantic information is further learned, so that a high-accuracy multi-label image classification model is obtained, thereby improving the accuracy of multi-label image classification.

```
┌─────────────────────────────────────────────────┐
│  a plurality of training samples are acquired     │ ─ S11
└─────────────────────────────────────────────────┘
                        ↓
┌─────────────────────────────────────────────────┐
│ semantic features of the label sets are acquired  │ ─ S12
│ from the classification labels                    │
└─────────────────────────────────────────────────┘
                        ↓
┌─────────────────────────────────────────────────┐
│ the sample images and the semantic features of    │
│ the label sets are input into a multi-label image  │
│ classification model, where the multi-label image  │
│ classification model acquires visual features      │ ─ S13
│ from the sample images based on a visual encoder,  │
│ acquires a correlation between the sample images   │
│ and the label sets by processing the visual        │
│ features and the semantic features based on a      │
│ contrastive learning network, and acquires a       │
│ prediction result of mapping the sample images to  │
│ the classification labels by processing the visual │
│ features based on a fully connected network        │
└─────────────────────────────────────────────────┘
                        ↓
┌─────────────────────────────────────────────────┐
│ a correlation matrix and a unit matrix             │
│ corresponding to the correlation matrix are        │ ─ S14
│ constructed based on the correlation               │
└─────────────────────────────────────────────────┘
                        ↓
┌─────────────────────────────────────────────────┐
│ a target loss is calculated based on the           │
│ correlation matrix, the unit matrix, the           │
│ prediction result and the classification labels,   │ ─ S15
│ and parameters of the multi-label image            │
│ classification model are adjusted based on the     │
│ target loss until a convergence condition is met   │
└─────────────────────────────────────────────────┘
```

**FIG. 1**

EP 4 636 708 A1

**Description**

CROSS-REFERENCE TO RELATED APPLICATIONS

This application claims priority to Chinese Patent Application No. 202211626780.1, filed on December 16, 2022, and entitled "MULTI-LABEL IMAGE CLASSIFICATION METHOD AND APPARATUS, AND MULTI-LABEL IMAGE CLASSIFICATION MODEL TRAINING METHOD AND APPARATUS", the entire disclosure of which is incorporated herein by reference.

TECHNICAL FIELD

The present disclosure generally relates to image classification technology field, and more particularly, to a multi-label image classification method and apparatus, and a multi-label image classification model training method and apparatus.

BACKGROUND

Image classification refers to a process of assigning a category label to an image from multiple pre-set category labels, which includes single-label classification and multi-label classification. Single-label classification includes assigning a single label to each image that best expresses content of the image, while multi-label classification includes assigning multiple category labels to each image. In comparison, multi-label image classification can better express the content of images and thus is more widely applied. However, existing image classification technologies generally classify images merely based on content. For multi-label image classification, misidentification and omission of identification labels easily occur, resulting in low accuracy.

SUMMARY

Embodiments of the present disclosure provide a multi-label image classification method and apparatus, and a multi-label image classification model training method and apparatus, which may improve accuracy of multi-label image classification.

In an embodiment of the present disclosure, a multi-label image classification model training method is provided, including: acquiring a plurality of training samples, wherein the plurality of training samples include sample images and label sets corresponding to the sample images, and each of the label sets include at least two classification labels; acquiring semantic features of the label sets from the classification labels; inputting the sample images and the semantic features of the label sets into a multi-label image classification model, wherein the multi-label image classification model acquires visual features from the sample images based on a visual encoder, acquires a correlation between the sample images and the label sets by processing the visual features and the semantic features based on a contrastive learning network, and acquires a prediction result of mapping the sample images to the classification labels by processing the visual features based on a fully connected network; constructing a correlation matrix and a unit matrix corresponding to the correlation matrix based on the correlation; and calculating a target loss based on the correlation matrix, the unit matrix, the prediction result and the classification labels, and adjusting parameters of the multi-label image classification model based on the target loss until a convergence condition is met.

Optionally, the visual encoder includes a convolutional neural network and a Transformer network, and said acquiring the visual features from the sample images based on the visual encoder includes: inputting the sample images into the convolutional neural network for feature extraction to acquire a corresponding feature map; flattening the feature map to acquire a first feature; inputting the first feature into the Transformer network for encoding processing to acquire a second feature; and generating the visual features based on the second feature.

Optionally, said acquiring the semantic features of the label sets from the classification labels includes: inputting the classification labels into a semantic encoder for semantic mapping respectively to acquire semantic features of the classification labels; acquiring weight parameters of the classification labels; and generating the semantic features of the label sets based on the weight parameters and the semantic features of the classification labels.

Optionally, said calculating the target loss based on the correlation matrix, the unit matrix, the prediction result and the classification labels includes: calculating a first loss based on the correlation matrix and the unit matrix; calculating a second loss based on the prediction result and the classification labels; and determining the target loss based on the first loss and the second loss.

Optionally, the first loss includes a row loss and a column loss, and said calculating the first loss based on the correlation matrix and the unit matrix includes: substituting the correlation matrix and the unit matrix into a first loss function to acquire the row loss, wherein the first loss function includes:

$$L_x = \frac{1}{N}\sum_{i=1}^{N}\sum_{j=1}^{N}[e_{ij}log(\sigma(M_{ij})) + (1 - e_{ij})log(1 - \sigma(M_{ij}))],$$

where $L_x$ is the row loss, $M_{ij}$ is an element in $i$-th row and $j$-th column of the correlation matrix, $e_{ij}$ is an element in $i$-th row and $j$-th column of the unit matrix, $\sigma()$ is an activation function, and $N$ is a number of the sample images; substituting the correlation matrix and the unit matrix into a second loss function to acquire the column loss, wherein the second loss function includes:

$$L_y = \frac{1}{N}\sum_{i=1}^{N}\sum_{j=1}^{N}[e_{ji}log(\sigma(M_{ji})) + (1 - e_{ji})log(1 - \sigma(M_{ji}))],$$

wherein $L_y$ is the column loss, $M_{ji}$ is an element in $j$-th row and $i$-th column of the correlation matrix, $e_{ji}$ is an element in $j$-th row and $i$-th column of the unit matrix, $\sigma()$ is the activation function, and N is the number of the sample images; and determining the first loss based on the row loss and the column loss; and/or, said calculating a second loss based on the prediction result and the classification labels includes: substituting the prediction result and the classification labels into a third loss function to acquire the second loss, wherein the third loss function includes:

$$L_v = \frac{1}{N}\sum_{k=1}^{N}\sum_{t=1}^{T}[g_{kt}log(\sigma(v_{kt})) + (1 - g_{kt})log(1 - \sigma(v_{kt}))],$$

where $L_v$ is the second loss, $g_{kt}$ is a true label value of a $k$-th sample image mapped to a t-h classification label, $v_{kt}$ is the prediction result value of the $k$-th sample image mapped to the $t$-th classification label, $\sigma()$ is the activation function, $N$ is the number of the sample images, and T is a number of the classification labels.

In an embodiment of the present disclosure, a multi-label image classification method is provided, including: acquiring a to-be-classified image and at least two candidate labels; acquiring semantic features of the at least two candidate labels from the at least two candidate labels; inputting the to-be-classified image and the semantic features of the at least two candidate labels into a multi-label image classification model for classification processing, to acquire a correlation between the to-be-classified image and the at least two candidate labels, and a prediction result of mapping the to-be-classified image to the at least two candidate labels, wherein the multi-label image classification model is acquired by the above method; and determining a classification result of the to-be-classified image based on the correlation and the prediction result.

In an embodiment of the present disclosure, a multi-label image classification model training apparatus is provided, including: a first acquisition circuitry configured to acquire a plurality of training samples, wherein the plurality of training samples include sample images and label sets corresponding to the sample images, and each of the label sets include at least two classification labels; a second acquisition circuitry configured to acquire semantic features of the label sets from the classification labels; a first classification circuitry configured to input the sample images and the semantic features of the label sets into a multi-label image classification model, wherein the multi-label image classification model acquires visual features from the sample images based on a visual encoder, acquires a correlation between the sample images and the label sets by processing the visual features and the semantic features based on a contrastive learning network, and acquires a prediction result of mapping the sample images to the classification labels by processing the visual features based on a fully connected network; a construction circuitry configured to construct a correlation matrix and a unit matrix corresponding to the correlation matrix based on the correlation; and a training circuitry configured to calculate a target loss based on the correlation matrix, the unit matrix, the prediction result and the classification labels, and adjust parameters of the multi-label image classification model based on the target loss until a convergence condition is met.

In an embodiment of the present disclosure, a multi-label image classification apparatus is provided, including: a third acquisition circuitry configured to acquire a to-be-classified image and at least two candidate labels; a fourth acquisition circuitry configured to acquire semantic features of the at least two candidate labels from the at least two candidate labels; a second classification circuitry configured to input the to-be-classified image and the semantic features of the at least two candidate labels into a multi-label image classification model for classification processing, to acquire a correlation between the to-be-classified image and the at least two candidate labels, and a prediction result of mapping the to-be-classified image to the at least two candidate labels, wherein the multi-label image classification model is acquired by the above apparatus; and a classification result determination circuitry configured to determine a classification result of the to-be-classified image based on the correlation and the prediction result.

In an embodiment of the present disclosure, an electronic device is provided, which includes a memory, a processor, and a computer program stored in the memory and configured to run on the processor, where when the processor executes the computer program, any one of the above methods is implemented.

In an embodiment of the present disclosure, a computer readable storage medium having computer instructions stored therein is provided, where when the computer instructions are executed by a processor, any one of the above methods is implemented.

On the basis of being in accordance with common sense in the art, the above-mentioned optional conditions can be arbitrarily combined to acquire embodiments of the present disclosure.

Embodiments of the present disclosure may provide following advantages.

The semantic information in the labels is utilized to acquire the semantic information of the label sets corresponding to the images in advance. During the training of the model, in addition to training the prediction result of the labels corresponding to image information, the correlation between the image information and the semantic information of the label sets is also learned, thereby acquiring a highly accurate multi-label image classification model, which effectively improves accuracy of multi-label image classification. In addition, by jointly optimizing the model with multiple loss functions, it is ensured that the image classification model can converge to an optimal solution, further improving the accuracy of multi-label image classification.

BRIEF DESCRIPTION OF THE DRAWINGS

FIG. 1 is a flow chart of a multi-label image classification model training method according to an embodiment;

FIG. 2 is a framework diagram of acquiring semantic features by a semantic encoder in the multi-label image classification model training method illustrated in FIG. 1;

FIG. 3 is a framework diagram of acquiring visual features by a visual encoder in the multi-label image classification model training method illustrated in FIG. 1;

FIG. 4 is a framework diagram of training a contrastive learning network in the multi-label image classification model training method illustrated in FIG. 1;

FIG. 5 is a flow chart of a multi-label image classification method according to an embodiment;

FIG. 6 is a framework diagram of acquiring semantic features by a semantic encoder in the multi-label image classification method illustrated in FIG. 5;

FIG. 7 is a framework diagram of the multi-label image classification method illustrated in FIG. 5;

FIG. 8 is a framework diagram of acquiring correlation through a contrastive learning network in the multi-label image classification method illustrated in FIG. 5;

FIG. 9 is a block diagram of a multi-label image classification model training apparatus according to an embodiment;

FIG. 10 is a block diagram of a multi-label image classification apparatus according to an embodiment; and

FIG. 11 is a block diagram of an electronic device according to an embodiment.

DETAILED DESCRIPTION

The present disclosure is further described below via embodiments, but the present disclosure is not limited to the scope of the embodiments.

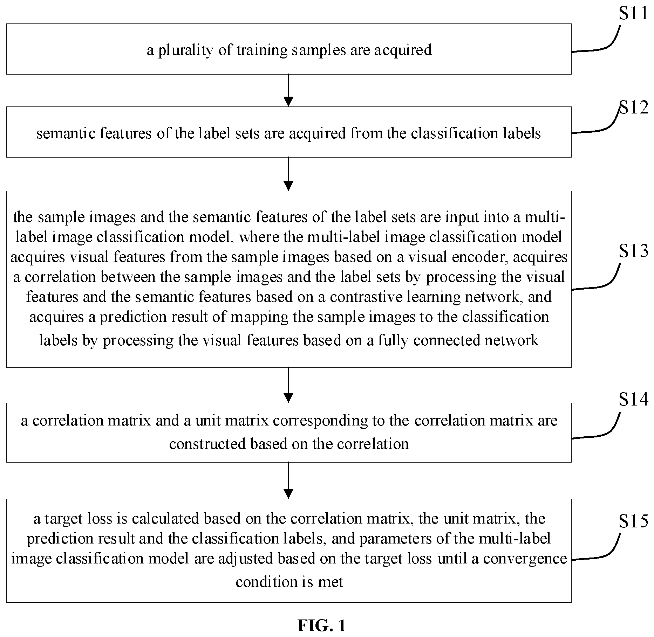

An embodiment provides a multi-label image classification model training method. As illustrated in FIG. 1, the method includes S11 to S15.

In S11, a plurality of training samples are acquired.

The plurality of training samples include sample images and label sets corresponding to the sample images, and each of the label sets includes at least two classification labels.

In the embodiment, each training sample includes one sample image and one label set corresponding to the sample image. The sample image may be taken by a device or crawled from the Internet. The sample image may include multiple different categories of image information. For example, a landscape image includes image information such as the sun, clouds, mountains, and rivers. Different image information in the sample image is labeled (i.e., with classification labels) to acquire a label set corresponding to the sample image.

In an optional embodiment, to better extract features of the sample images, the sample images are preprocessed, such as scaling the sample images with a same short side size, and then normalizing pixels of the sample images, that is, mapping the pixels to a range from 0 to 1, thereby eliminating influence of unit and scale differences in the image features. In addition, some color jittering operations may be performed to enhance the color of the images by adjusting the brightness, saturation and contrast of the images to eliminate differences of the images in different backgrounds, etc. The embodiment is not limited to the above-mentioned image preprocessing operations.

In S12, semantic features of the label sets are acquired from the classification labels.

In the embodiment, the label sets are encoded to acquire the semantic features of the label sets. In an optional embodiment, the classification labels are respectively input into a semantic encoder for semantic mapping to acquire the semantic features of the classification labels. Then weight parameters of each classification label are acquired. Finally, the semantic features of the label sets are generated based on the weight parameters and the semantic features of the classification labels.

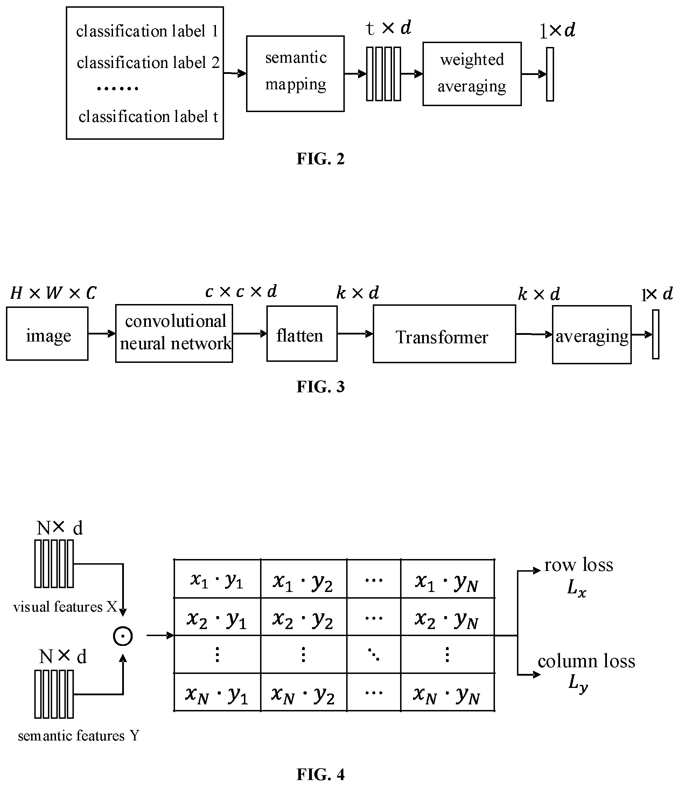

For example, as illustrated in FIG. 2, assuming that the label set corresponding to a particular image includes t classification labels, these k classification labels are input into the semantic encoder for semantic mapping to acquire semantic features with a dimension of $t \times d$. In an optional embodiment, the semantic mapping may use relevant models which map each word to generate semantic features, such as Glove, Bert, ELMo and word2vec (some classic word vector models). As the semantic encoder also includes guessing words in adjacent positions when performing semantic mapping, the semantic features are also used to characterize a correlation between classification labels.

In an optional embodiment, to acquire the semantic feature of the label set, the semantic encoder is further configured to acquire a weight parameter of each classification label. Referring to FIG. 2, the $t \times d$ semantic features are fused into a $1 \times d$ semantic feature by weighted averaging. That is, the semantic feature of each classification label is multiplied by the corresponding weight parameter, and then an average is taken to acquire the semantic feature of the label set, where a sum of the weight parameters of all classification labels under the label set is 1.

In S13, the sample images and the semantic features of the label sets are input into a multi-label image classification model, where the multi-label image classification model acquires visual features from the sample images based on a visual encoder, acquires a correlation between the sample images and the label sets by processing the visual features and the semantic features based on a contrastive learning network, and acquires a prediction result of mapping the sample images to the classification labels by processing the visual features based on a fully connected network.

In the embodiment, the sample images are encoded, that is, the visual features of the sample images are acquired, and the visual features can be acquired from the sample images through the visual encoder of the multi-label image classification model. In an optional embodiment, the visual encoder includes a convolutional neural network and a Transformer network. The sample images may be input into the convolutional neural network for feature extraction to acquire a corresponding feature map. Then the feature map is flattened to acquire a first feature to be input into the Transformer network for encoding processing to acquire a second feature. Finally, the visual features are generated based on the second feature.

For example, as illustrated in FIG. 3, a sample image of $H \times W \times C$ is input into a convolutional neural network for feature extraction, where H is height of the sample image, W is width of the sample image, and C is a number of channels of the sample image. Generally, C=3, which corresponds to three channels of R, G, and B. If it is a grayscale image, there is a single channel with the number of channels C=1. The convolutional neural network includes multiple convolutional layers, which extract local features of the sample image in a hierarchical form through convolution operations. Output of the last convolutional layer is acquired to acquire a feature map with a feature dimension of $c \times c \times d$. In an optional embodiment, the convolutional neural network can adopt structures such as a VGG network (a classic convolutional neural network) and a Resnet network (a residual network).

Referring to FIG. 3, the feature map with a feature dimension of $c \times c \times d$ is flattened into a first feature of $k \times d$, where $k = c^2$. Afterward, the first feature is sent to the Transformer network for further encoding processing to acquire a second feature with a feature dimension of $k \times d$. The Transformer network can reflect complex spatial transformations and long-distance relationships between visual elements, etc., thereby forming a global representation. In the embodiment, the features output by the visual encoder through the convolutional neural network and the Transformer network can take into account both local feature details and global representation, which is more conducive to subsequent image classification.

In an optional embodiment, the $1 \times d$ visual features of the sample images are acquired by taking an average value of the $k \times d$ second features.

It should be noted that the semantic encoder in the embodiment is pre-trained, while the visual encoder is generated by learning during the training of the multi-label image classification model.

In the embodiment, a contrastive learning network and a fully connected network are introduced into the multi-label image classification model. After the visual features and semantic features are acquired, two branches are provided for further processing. One branch is to input the visual features and the semantic features into the contrastive learning network, and process the visual features and the semantic features based on the contrastive learning network to acquire the correlation between the sample images and the label sets. The other branch is to send the visual features to the fully connected network for fully connected mapping, so as to process the visual features based on the fully connected network to acquire the prediction result of mapping the sample images to the classification labels (i.e., prediction probability of each classification label).

In an optional embodiment, core content of the contrastive learning network in the training stage is illustrated in FIG. 4. There are N training samples including N sample images and N corresponding label sets. The N×d visual features X and the N×d semantic features Y are multiplied one by one to acquire cosine similarity (i.e., the correlation between the sample images and the label sets). The cosine similarity is represented by $x_i \cdot y_j$, and $x_i \cdot y_j = |x_i||y_i| \cos\theta$, where $x_i$ represents the i-th visual feature and $y_j$ represents the j-th semantic feature. For example, assuming there are two training samples, the cosine similarity includes $x_1 \cdot y_1$, $x_1 \cdot y_2$, $x_2 \cdot y_1$ and $x_2 \cdot y_2$.

In S 14, a correlation matrix and a unit matrix corresponding to the correlation matrix are constructed based on the correlation.

The correlation matrix is illustrated in FIG. 4, where the visual features and the semantic features which constitute matching pairs are set on a diagonal from an upper left corner to a lower right corner. As it is necessary to maximize the cosine similarity between the visual features of the sample images and the semantic features of the corresponding matching label sets, and minimize the cosine similarity between the visual features and the semantic features of non-matching pairs during the training, the unit matrix is required. The unit matrix has following characteristics. Elements on the diagonal from the upper left corner to the lower right corner are all 1, other elements are all 0, and any matrix multiplied by the unit matrix is equal to the matrix itself, which has a special function.

For example, assuming there are N visual features and N corresponding semantic features, N×N cosine similarity is acquired, thereby constructing a cosine similarity matrix (i.e., a correlation matrix) with a dimension of N×N and a unit matrix with a dimension of N×N.

In S15, a target loss is calculated based on the correlation matrix, the unit matrix, the prediction result and the classification labels, and parameters of the multi-label image classification model are adjusted based on the target loss until a convergence condition is met.

In the embodiment, the first loss is calculated based on the correlation matrix and the unit matrix, the second loss is calculated based on the prediction result and the corresponding classification labels, and the target loss is determined based on the first loss and the second loss.

In an optional embodiment, the first loss includes a row loss and a column loss, and cross entropy loss is performed on the semantic features and the visual features respectively, that is, values on the diagonal are maximized from the rows and columns of the correlation matrix respectively, thereby acquiring the row loss $L_x$ and the column loss $L_y$ respectively. Specifically, the correlation matrix and the unit matrix are substituted into the first loss function to acquire the row loss, where a calculation formula of the first loss function includes:

$$L_x = \frac{1}{N} \sum_{i=1}^{N} \sum_{j=1}^{N} [e_{ij} log(\sigma(M_{ij})) + (1 - e_{ij}) log(1 - \sigma(M_{ij}))],$$

where $L_x$ is the row loss, $M_{ij}$ is an element in i-th row and j-th column of the correlation matrix, $e_{ij}$ is an element in i-th row and j-th column of the unit matrix, $\sigma()$ is an activation function, and $N$ is a number of the sample images.

The correlation matrix and the unit matrix are substituted into a second loss function to acquire the column loss, where the second loss function includes:

$$L_y = \frac{1}{N} \sum_{i=1}^{N} \sum_{j=1}^{N} [e_{ji} log(\sigma(M_{ji})) + (1 - e_{ji}) log(1 - \sigma(M_{ji}))],$$

where $L_y$ is the column loss, $M_{ji}$ is an element in j-th row and i-th column of the correlation matrix, $e_{ji}$ is an element in j-th row and i-th column of the unit matrix, $\sigma()$ is the activation function, and N is the number of the sample images.

The first loss is determined based on the row loss and the column loss. In an optional embodiment, the first loss is acquired by averaging the row loss and the column loss. In another optional embodiment, the rows and the columns of the correlation matrix are traversed respectively to calculate the row loss and the column loss, that is, traversal orders are different. Ideally, $L_x = L_y$, and $L_x$ and $L_y$ are only different in meaning. Therefore, the row loss or the column loss can be directly used as the first loss to reduce the amount of calculation. The first loss $L_{xy} = L_x = L_y$, or $L_{xy} = (L_x + L_y)/2$. In practice, to ensure accuracy of the model, $L_{xy} = (L_x + L_y)/2$.

In an optional embodiment, a cross entropy loss (i.e., the second loss) is calculated based on the prediction result and the classification labels corresponding to the sample images. Specifically, the prediction result and the corresponding classification labels are substituted into the third loss function to acquire the second loss. A calculation formula of the third loss function includes:

$$L_v = \frac{1}{N}\sum_{k=1}^{N}\sum_{t=1}^{T}[\boldsymbol{g}_{kt}log(\sigma(\mathcal{v}_{kt})) + (1-\boldsymbol{g}_{kt})log(1-\sigma(\mathcal{v}_{kt}))],$$

where $L_v$ is the second loss, $g_{kt}$ is a true label value (i.e., "0" or "1") of a $k$-th sample image mapped to a t-h classification label, $\mathcal{v}_{kt}$ is the prediction result value of the $k$-th sample image mapped to the $t$-th classification label, $\sigma()$ is the activation function, $N$ is the number of the sample images, and T is a number of the classification labels.

In an optional embodiment, there may be a problem of sample imbalance in the training samples, such as complex sample images or uncommon labels, etc. During the model training process, greater weights may be given to difficult samples to focus on learning difficult samples.

The first loss and the second loss are combined to acquire the total loss (i.e., a target loss) of the multi-label image classification model. The parameters of the multi-label image classification model are adjusted by back-propagating the target loss until the multi-label image classification model meets the convergence condition. In an optional embodiment, the convergence condition may be that the target loss is less than a preset threshold. By presetting a relatively small loss threshold, when the target loss is less than the set loss threshold, the multi-label image classification model is determined to have converged. In another optional embodiment, the convergence condition may be that a number of iterations of the multi-label image classification model training is greater than a preset iteration number. By presetting a relatively large iteration number, when the number of iterations of the multi-label image classification model training is greater than the set iteration number, the multi-label image classification model is determined to have converged.

In an optional embodiment, a learnable hyperparameter $\lambda$ is set to coordinate the weights of the first loss and the second loss in the training of the multi-label image classification model. $\lambda$ represents the target loss, having a value between 0 and 1. A calculation formula is as follows:

$$L = \lambda L_v + (1-\lambda)L_{xy}.$$

In an optional embodiment, in an early stage of multi-label image classification model training, $\lambda$ is preset with a smaller value, and as the number of iterations of the multi-label image classification model training increases, the value of $\lambda$ is gradually increased, and iterative training is continued. The embodiment is not limited to the above-mentioned parameter adjustment method, and alternatively manual parameter adjustment may be performed according to actual conditions.

In an optional embodiment, an optimization goal of the multi-label image classification model is to minimize the target loss. A target threshold of the target loss L is set. Iterative training is performed, and the multi-label image classification model is determined to converge when the value of the target loss L is lower than the target threshold and the model parameters change very little.

The embodiment has following beneficial effects.

The semantic information in the labels is utilized to acquire the semantic information of the label sets corresponding to the images in advance. During the training of the model, in addition to training the prediction result of the labels corresponding to image information, the correlation between the image information and the semantic information of the label sets is also learned, thereby acquiring a highly accurate multi-label image classification model, which effectively improves accuracy of multi-label image classification. In addition, by jointly optimizing the model with multiple loss functions, it is ensured that the image classification model can converge to an optimal solution, further improving the accuracy of multi-label image classification.

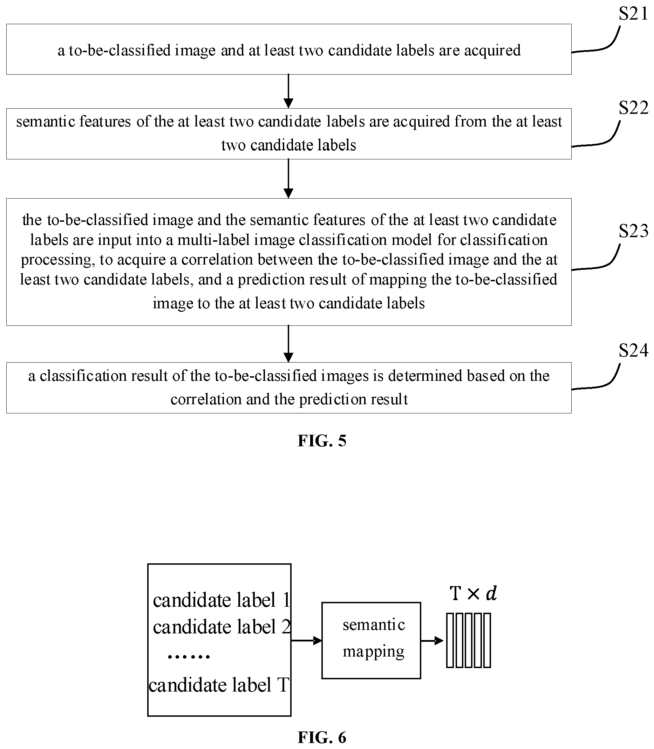

An embodiment provides a multi-label image classification method. As illustrated in FIG. 5, the multi-label image classification method includes S21 to S23.

In S21, a to-be-classified image and at least two candidate labels are acquired.

In S22, semantic features of the at least two candidate labels are acquired from the at least two candidate labels.

In an optional embodiment, all candidate labels are input into a semantic encoder for semantic mapping to acquire semantic features of the candidate labels. As illustrated in FIG. 6, there are T candidate labels, and accordingly semantic features with a dimension of T×d are acquired.

In S23, the to-be-classified image and the semantic features of the at least two candidate labels are input into a multi-label image classification model for classification processing, to acquire a correlation between the to-be-classified image and the at least two candidate labels, and a prediction result of mapping the to-be-classified image to the at least two candidate labels.

The multi-label image classification model is acquired by the above method as illustrated in FIG. 1.

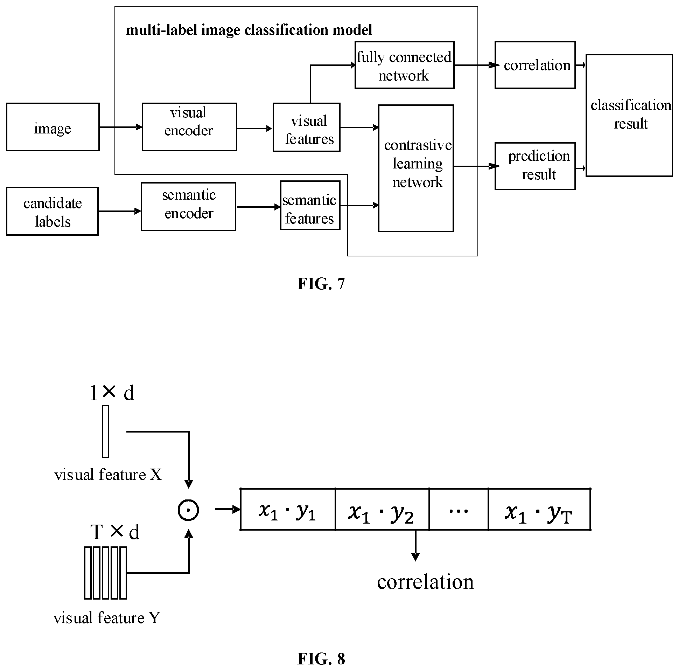

In the embodiment, as illustrated in FIG. 7, an image (i.e., the to-be-classified image) is input into a visual encoder of the multi-label image classification model to acquire visual features, and all candidate labels are input into the semantic encoder to acquire the semantic features. After the visual features and the semantic features are acquired, two branches are provided. One branch is to input the visual features and the semantic features into a trained contrastive learning network to acquire a correlation between the image to be classified and each candidate label. The other branch is to send the visual features to a fully connected network for fully connected mapping to acquire the prediction result of mapping the to-be-classified image to each classification label (i.e., prediction probability of each classification label).

In an optional embodiment, core content of the contrastive learning network in the prediction stage is illustrated in FIG. 8. The $1\times d$ visual features X and the $T\times d$ semantic features Y are multiplied one by one to calculate cosine similarity of the visual features on each candidate label (that is, a correlation between the to-be-classified image and each candidate label). Referring to FIG. 8, assuming that there are T candidate labels, the cosine similarity includes $x_1 \cdot y_1, x_1 \cdot y_2, ... x_1 \cdot y_T$.

In S24, a classification result of the to-be-classified images is determined based on the correlation and the prediction result.

After the prediction result of the fully connected network and the correlation of the contrastive learning network are acquired respectively, the classification result of the to-be-classified image may be $p = \lambda p_v + (1 - \lambda)p_d$, where $p_v$ is the prediction result of the fully connected network, $p_d$ is the correlation of the contrastive learning network, and $\lambda$ is a weight parameter having a same value as the learnable hyperparameter in the training stage. The learnable hyperparameter $\lambda$ in the training stage may be adjusted according to the classification result.

In an optional embodiment, a label threshold of the classification result may be set according to actual conditions. For example, if the classification result is above 0.5, it indicates that the candidate label is a label corresponding to the to-be-classified image.

For example, assuming that the candidate labels of the to-be-classified image include hats, tops, pants, shoes, scarves and skirts, the correlation between the to-be-classified image and the candidate labels is acquired as [0.1, 0.2, 0.3, 0.7, 0.5, 0.6] through classification performed by the multi-label image classification model. And the prediction result of the to-be-classified image being mapped to the candidate labels is [0.3, 0.2, 0.4, 0.4, 0.3, 0.6]. If $\lambda$ is 0.5, the classification result is calculated to be [0.15, 0.2, 0.35, 0.55, 0.4, 0.6], where these values correspond to hats, tops, pants, shoes, scarves and skirts in order, and the candidate labels with a value greater than 0.5 are set as the labels of the to-be-classified image. From above, the traditional fully connected network predicts that the label of the to-be-classified image is only skirt, while the labels of the to-be-classified image acquired in the embodiment include shoes and skirt.

The embodiment has following beneficial effects.

In the embodiment, the semantic information of the candidate labels is introduced, and the multi-label classification model used for classification processing is acquired by the multi-label image classification model training method provided in the embodiment as illustrated in FIG. 1. When the multi-label image classification model is applied to a specific classification task, in addition to the traditional prediction result, the correlation between the image information and the semantic information of the candidate labels is improved by the contrastive learning network, and accordingly the multi-label image classification result output by the model is more accurate.

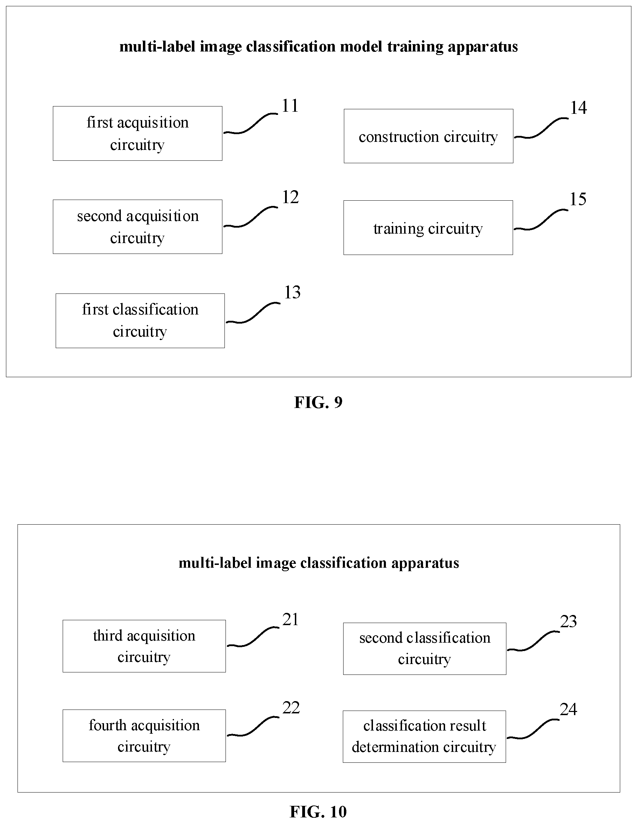

An embodiment of the present disclosure provides a multi-label image classification model training apparatus. As illustrated in FIG. 9, the apparatus includes: a first acquisition circuitry 11, a second acquisition circuitry 12, a first classification circuitry 13, a construction circuitry 14, and a training circuitry 15.

The first acquisition circuitry 11 is configured to acquire a plurality of training samples. The plurality of training samples include sample images and label sets corresponding to the sample images, and each of the label sets include at least two classification labels.

In the embodiment, each training sample includes one sample image and one label set corresponding to the sample image. The sample image may be taken by a device or crawled from the Internet. The sample image may include multiple different categories of image information. For example, a landscape image includes image information such as the sun, clouds, mountains, and rivers. Different image information in the sample image is labeled (i.e., with classification labels) to acquire a label set corresponding to the sample image.

In an optional embodiment, to better extract features of the sample images, the first acquisition circuitry 11 preprocesses the sample images, such as scaling the sample images with a same short side size, and then normalizing pixels of the sample images, that is, mapping the pixels to a range from 0 to 1, thereby eliminating influence of unit and scale differences in the image features. In addition, some color jittering operations may be performed to enhance the color of the images by adjusting the brightness, saturation and contrast of the images to eliminate differences of the images in different backgrounds, etc. The embodiment is not limited to the above-mentioned image preprocessing operations.

The second acquisition circuitry 12 is configured to acquire semantic features of the label sets from the classification labels. In the embodiment, the label sets are encoded to acquire the semantic features of the label sets. In an optional embodiment, the second acquisition circuitry 12 inputs the classification labels respectively into a semantic encoder for semantic mapping to acquire the semantic features of the classification labels. The second acquisition circuitry 12 further acquires weight parameters of each classification label, and generates the semantic features of the label sets based on the weight parameters and the semantic features of the classification labels.

For example, as illustrated in FIG. 2, assuming that the label set corresponding to a particular image includes t classification labels, these k classification labels are input into the semantic encoder for semantic mapping to acquire semantic features with a dimension of $t\times d$. In an optional embodiment, the semantic mapping may use relevant models which map each word to generate semantic features, such as Glove, Bert, ELMo and word2vec (some classic word vector models). As the semantic encoder also includes guessing words in adjacent positions when performing semantic mapping, the semantic features are also used to characterize a correlation between classification labels.

In an optional embodiment, to acquire the semantic feature of the label set, the semantic encoder is further configured to acquire a weight parameter of each classification label. Referring to FIG. 2 and FIG. 9, the second acquisition circuitry 12 fuses the t×d semantic features into a 1×d semantic feature by weighted averaging. That is, the semantic feature of each classification label is multiplied by the corresponding weight parameter, and then an average is taken to acquire the semantic feature of the label set, where a sum of the weight parameters of all classification labels under the label set is 1.

Referring to FIG. 9, the first classification circuitry 13 is configured to input the sample images and the semantic features of the label sets into a multi-label image classification model, wherein the multi-label image classification model acquires visual features from the sample images based on a visual encoder, acquires a correlation between the sample images and the label sets by processing the visual features and the semantic features based on a contrastive learning network, and acquires a prediction result of mapping the sample images to the classification labels by processing the visual features based on a fully connected network.

In the embodiment, the first classification circuitry 13 is further configured to encode the sample images, that is, to acquire the visual features of the sample images, where the visual features can be acquired from the sample images through the visual encoder of the multi-label image classification model. In an optional embodiment, the visual encoder includes a convolutional neural network and a Transformer network. The sample images may be input into the convolutional neural network for feature extraction to acquire a corresponding feature map. Then the feature map is flattened to acquire a first feature to be input into the Transformer network for encoding processing to acquire a second feature. Finally, the visual features are generated based on the second feature.

For example, referring to FIG. 3 and FIG. 9, the first classification circuitry 13 inputs a sample image of H×W×C into a convolutional neural network for feature extraction, where H is height of the sample image, W is width of the sample image, and C is a number of channels of the sample image. Generally, C=3, which corresponds to three channels of R, G, and B. If it is a grayscale image, there is a single channel with the number of channels C=1. The convolutional neural network includes multiple convolutional layers, which extract local features of the sample image in a hierarchical form through convolution operations. The first classification circuitry 13 acquires output of the last convolutional layer to acquire a feature map with a feature dimension of c×c×d. In an optional embodiment, the convolutional neural network can adopt structures such as a VGG network (a classic convolutional neural network) and a Resnet network (a residual network).

Referring to FIG. 3, the first classification circuitry 13 flattens the feature map with a feature dimension of c×c×d into a first feature of k×d, where $k = c^2$. Afterward, the first classification circuitry 13 sends the first feature to the Transformer network for further encoding processing to acquire a second feature with a feature dimension of k×d. The Transformer network can reflect complex spatial transformations and long-distance relationships between visual elements, etc., thereby forming a global representation. In the embodiment, the features output by the visual encoder through the convolutional neural network and the Transformer network can take into account both local feature details and global representation, which is more conducive to subsequent image classification.

In an optional embodiment, the first classification circuitry 13 acquires the 1×d visual features of the sample images by taking an average value of the k×d second features.

It should be noted that the semantic encoder in the embodiment is pre-trained, while the visual encoder is generated by learning during the training of the multi-label image classification model.

In the embodiment, a contrastive learning network and a fully connected network are introduced into the multi-label image classification model. After the visual features and semantic features are acquired, the first classification circuitry 13 inputs the visual features and the semantic features into the contrastive learning network, and processes the visual features and the semantic features based on the contrastive learning network to acquire the correlation between the sample images and the label sets. The first classification circuitry 13 further sends the visual features to the fully connected network for fully connected mapping, so as to process the visual features based on the fully connected network to acquire the prediction result of mapping the sample images to the classification labels (i.e., prediction probability of each classification label).

In an optional embodiment, core content of the contrastive learning network in the training stage is illustrated in FIG. 4. There are N training samples including N sample images and N corresponding label sets. The first classification circuitry 13 multiplies the N×d visual features X with the N×d semantic features Y one by one to acquire cosine similarity (i.e., the correlation between the sample images and the label sets). The cosine similarity is represented by $x_i \cdot y_j$, and $x_i \cdot y_j = |x_i||y_j| \cos \theta$, where $x_i$ represents the i-th visual feature and $y_j$ represents the j-th semantic feature. For example, assuming there are two training samples, the cosine similarity includes $x_1 \cdot y_1$, $x_1 \cdot y_2$, $x_2 \cdot y_1$ and $x_2 \cdot \lambda_2$.

Referring to FIG. 9, the construction circuitry 14 is configured to construct a correlation matrix and a unit matrix corresponding to the correlation matrix based on the correlation. The correlation matrix is illustrated in FIG. 4, where the visual features and the semantic features which constitute matching pairs are set on a diagonal from an upper left corner to a lower right corner. As it is necessary to maximize the cosine similarity between the visual features of the sample images and the semantic features of the corresponding matching label sets, and minimize the cosine similarity between the visual features and the semantic features of non-matching pairs during the training, the construction circuitry 14 further needs to construct the unit matrix. The unit matrix has following characteristics. Elements on the diagonal from the upper left corner to the lower right corner are all 1, other elements are all 0, and any matrix multiplied by the unit matrix is equal to the matrix itself, which has a special function.

For example, assuming there are N visual features and N corresponding semantic features, N×N cosine similarity is acquired, thereby the construction circuitry 14 constructing a cosine similarity matrix (i.e., a correlation matrix) with a dimension of N×N and a unit matrix with a dimension of N×N.

Referring to FIG. 9, the training circuitry 15 is configured to calculate a target loss based on the correlation matrix, the unit matrix, the prediction result and the classification labels, and adjust parameters of the multi-label image classification model based on the target loss until a convergence condition is met. In the embodiment, the training circuitry 15 calculates the first loss based on the correlation matrix and the unit matrix, calculates the second loss based on the prediction result and the corresponding classification labels, and determines the target loss based on the first loss and the second loss.

In an optional embodiment, the first loss includes a row loss and a column loss. The training circuitry 15 performs cross entropy loss on the semantic features and the visual features respectively, that is, maximizing values on the diagonal from the rows and columns of the correlation matrix respectively, thereby acquiring the row loss $L_x$ and the column loss $L_y$ respectively. Specifically, the training circuitry 15 substitutes the correlation matrix and the unit matrix into the first loss function to acquire the row loss, where a calculation formula of the first loss function includes:

$$L_x = \frac{1}{N}\sum_{i=1}^{N}\sum_{j=1}^{N}[\boldsymbol{e}_{ij}log(\sigma(M_{ij})) + (1-\boldsymbol{e}_{ij})log(1-\sigma(M_{ij}))],$$

where $L_x$ is the row loss, $M_{ij}$ is an element in $i$-th row and $j$-th column of the correlation matrix, $e_{ij}$ is an element in $i$-th row and $j$-th column of the unit matrix, $\sigma()$ is an activation function, and $N$ is a number of the sample images.

The training circuitry 15 substitutes the correlation matrix and the unit matrix into a second loss function to acquire the column loss, where the second loss function includes:

$$L_y = \frac{1}{N}\sum_{i=1}^{N}\sum_{j=1}^{N}[\boldsymbol{e}_{ji}log(\sigma(M_{ji})) + (1-\boldsymbol{e}_{ji})log(1-\sigma(M_{ji}))],$$

where $L_y$ is the column loss, $M_{ji}$ is an element in j-th row and i-th column of the correlation matrix, $\boldsymbol{e}_{ji}$ is an element in j-th row and i-th column of the unit matrix, $\sigma()$ is the activation function, and N is the number of the sample images.

The training circuitry 15 determines the first loss based on the row loss and the column loss. In an optional embodiment, the training circuitry 15 acquires the first loss by averaging the row loss and the column loss. In another optional embodiment, the rows and the columns of the correlation matrix are traversed respectively to calculate the row loss and the column loss, that is, traversal orders are different. Ideally, $L_x = L_y$, and $L_x$ and $L_y$ are only different in meaning. Therefore, the training circuitry 15 can directly use the row loss or the column loss as the first loss to reduce the amount of calculation. The first loss $L_{xy} = L_x = L_y$, or $L_{xy} = (L_x + L_y)/2$. In practice, to ensure accuracy of the model, $L_{xy} = (L_x + L_y)/2$.

In an optional embodiment, the training circuitry 15 calculates a cross entropy loss (i.e., the second loss) based on the prediction result and the classification labels corresponding to the sample images. Specifically, the training circuitry 15 substitutes the prediction result and the corresponding classification labels into the third loss function to acquire the second loss. A calculation formula of the third loss function includes:

$$L_v = \frac{1}{N}\sum_{k=1}^{N}\sum_{t=1}^{T}[\boldsymbol{g}_{kt}log(\sigma(\mathscr{v}_{kt})) + (1-\boldsymbol{g}_{kt})log(1-\sigma(\mathscr{v}_{kt}))],$$

where $L_v$ is the second loss, $g_{kt}$ is a true label value (i.e., "0" or "1") of a $k$-th sample image mapped to a t-h classification label, $\mathscr{v}_{kt}$ is the prediction result value of the $k$-th sample image mapped to the $t$-th classification label, $\sigma()$ is the activation function, $N$ is the number of the sample images, and T is a number of the classification labels.

In an optional embodiment, there may be a problem of sample imbalance in the training samples, such as complex sample images or uncommon labels, etc. During the model training process, greater weights may be given to difficult samples to focus on learning difficult samples.

The training circuitry 15 combines the first loss and the second loss to acquire the total loss (i.e., a target loss) of the multi-label image classification model. The training circuitry 15 adjusts the parameters of the multi-label image classification model by back-propagating the target loss until the multi-label image classification model meets the convergence condition. In an optional embodiment, the convergence condition may be that the target loss is less than a preset threshold. By presetting a relatively small loss threshold, when the target loss is less than the set loss threshold, the multi-label image classification model is determined to have converged. In another optional embodiment, the convergence condition may be that a number of iterations of the multi-label image classification model training is greater than a preset iteration number. By presetting a relatively large iteration number, when the number of iterations of the multi-label image classification model training is greater than the set iteration number, the multi-label image classification model is determined to have converged.

In an optional embodiment, the training circuitry 15 sets a learnable hyperparameter λ to coordinate the weights of the first loss and the second loss in the training of the multi-label image classification model. λ represents the target loss, having a value between 0 and 1. A calculation formula is as follows:

$$L = \lambda L_v + (1 - \lambda) L_{xy}.$$

In an optional embodiment, in an early stage of multi-label image classification model training, λ is preset with a smaller value, and as the number of iterations of the multi-label image classification model training increases, the training circuitry 15 gradually increases the value of λ, and continues iterative training. The embodiment is not limited to the above-mentioned parameter adjustment method, and alternatively manual parameter adjustment may be performed according to actual conditions.

In an optional embodiment, an optimization goal of the multi-label image classification model is to minimize the target loss. The training circuitry 15 sets a target threshold of the target loss L. Iterative training is performed, and the multi-label image classification model is determined to converge when the value of the target loss L is lower than the target threshold and the model parameters change very little.

An embodiment of the present disclosure provides a multi-label image classification apparatus. As illustrated in FIG. 10, the apparatus includes: a third acquisition circuitry 21, a fourth acquisition circuitry 22, a second classification circuitry 23, and a classification result determination circuitry 24.

The third acquisition circuitry 21 is configured to acquire a to-be-classified image and at least two candidate labels.

The fourth acquisition circuitry 22 is configured to acquire semantic features of the at least two candidate labels from the at least two candidate labels. In an optional embodiment, the fourth acquisition circuitry 22 inputs all candidate labels into a semantic encoder for semantic mapping to acquire semantic features of the candidate labels. As illustrated in FIG. 6, there are T candidate labels, and accordingly semantic features with a dimension of T×d are acquired.

The second classification circuitry 23 is configured to input the to-be-classified image and the semantic features of the at least two candidate labels into a multi-label image classification model for classification processing, to acquire a correlation between the to-be-classified image and the at least two candidate labels, and a prediction result of mapping the to-be-classified image to the at least two candidate labels, where the multi-label image classification model is acquired by the above apparatus provided in the embodiment as illustrated in FIG. 9.

In the embodiment, as illustrated in FIG. 7, the second classification circuitry 23 inputs an image (i.e., the to-be-classified image) into a visual encoder of the multi-label image classification model to acquire visual features, and the fourth acquisition circuitry 22 inputs all candidate labels into the semantic encoder to acquire the semantic features. The second classification circuitry 23 inputs the visual features and the semantic features into a trained contrastive learning network to acquire a correlation $p_d$ between the image to be classified and each candidate label. The second classification circuitry 23 further sends the visual features to a fully connected network for fully connected mapping to acquire the prediction result $p_v$ of mapping the to-be-classified image to each classification label (i.e., prediction probability of each classification label).

In an optional embodiment, core content of the contrastive learning network in the prediction stage is illustrated in FIG. 8. The second classification circuitry 23 multiplies the 1×d visual features X with the T×d semantic features Y one by one to calculate cosine similarity of the visual features on each candidate label (that is, a correlation between the to-be-classified image and each candidate label). Referring to FIG. 8, assuming that there are T candidate labels, the cosine similarity includes $x_1 \cdot y_1, x_1 \cdot y_2, ... x_1 \cdot y_T$.

Referring to FIG. 10, the classification result determination circuitry 24 is configured to determine a classification result of the to-be-classified image based on the correlation and the prediction result. After the prediction result of the fully connected network and the correlation of the contrastive learning network are acquired respectively, the classification result of the to-be-classified image may be $p = \lambda p_v + (1 - \lambda) p_d$, where $p_v$ is the prediction result of the fully connected network, $p_d$ is the correlation of the contrastive learning network, and λ is a weight parameter having a same value as the learnable hyperparameter in the training stage. The learnable hyperparameter λ in the training stage may be adjusted according to the classification result.

In an optional embodiment, the classification result determination circuitry 24 may set a label threshold of the classification result according to actual conditions. For example, if the classification result is above 0.5, it indicates that the candidate label is a label corresponding to the to-be-classified image.

For example, assuming that the candidate labels of the to-be-classified image include hats, tops, pants, shoes, scarves and skirts, the correlation between the to-be-classified image and the candidate labels is acquired as [0.1, 0.2, 0.3, 0.7, 0.5, 0.6] through classification performed by the multi-label image classification model. And the prediction result of the to-be-classified image being mapped to the candidate labels is [0.3, 0.2, 0.4, 0.4, 0.3, 0.6]. If $\lambda$ is 0.5, the classification result is calculated to be [0.15, 0.2, 0.35, 0.55, 0.4, 0.6], where these values correspond to hats, tops, pants, shoes, scarves and skirts in order, and the candidate labels with a value greater than 0.5 are set as the labels of the to-be-classified image. From above, the traditional fully connected network predicts that the label of the to-be-classified image is only skirt, while the labels of the to-be-classified image acquired in the embodiment include shoes and skirt.

An embodiment provides an electronic device, which includes a memory, a processor, and a computer program stored in the memory and used to run on the processor. When the processor executes the program, the multi-label image classification model training method provided in the embodiment as illustrated in FIG. 1 and the multi-label image classification method provided in the embodiment as illustrated in FIG. 5 are implemented.

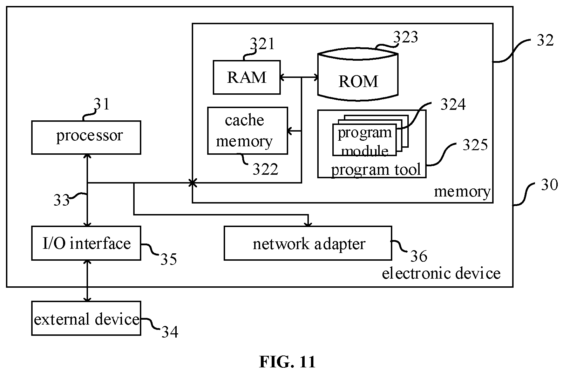

An electronic device 30 illustrated in FIG. 11 is merely an example and should not limit functions and usage scope of the embodiments of the present disclosure.

The electronic device 30 may be in a form of a general-purpose computing device, for example, it may be a server device. Components of the electronic device 30 may include but are not limited to: at least one processor 31, at least one memory 32, and a bus 33 connecting different system components (including the memory 32 and the processor 31).

The bus 33 includes a data bus, an address bus, and a control bus.

The memory 32 may include a volatile memory, such as a Random Access Memory (RAM) 321 and a cache memory 322, and may further include a Read Only Memory (ROM) 323.

The memory 32 may further include a program tool 325 having a set (at least one) of program modules 324, such program modules 324 including but not limited to: an operating system, one or more application programs, other program modules and program data, each of which or any combination of which may include implementation of a network environment.

The processor 31 executes various functional applications and data processing by running the computer program stored in the memory 32, such as the multi-label image classification model training method provided in the embodiment as illustrated in FIG. 1 and the multi-label image classification method provided in the embodiment as illustrated in FIG. 5.

The electronic device 30 may further communicate with one or more external devices 34. Such communication may be performed via an Input/Output (I/O) interface 35. Further, the electronic device 30 may also communicate with one or more networks via a network adapter 36. As illustrated in FIG. 11, the network adapter 36 communicates with other modules of the electronic device 30 via a bus 33. It should be understood that, although not illustrated in FIG. 11, other hardware and/or software modules may be used in conjunction with the electronic device 30, including but not limited to: microcode, device drivers, redundant processors, external disk drive arrays, RAID (disk array) systems, tape drives, and data backup storage systems.

It should be noted that although several units/modules or sub-units/modules of the electronic device are mentioned in the above detailed description, the division is merely exemplary and not mandatory. In fact, according to embodiments of the present disclosure, the features and functions of two or more units/modules described above can be embodied in one unit/module. Conversely, the features and functions of one unit/module described above can be further divided into multiple units/modules to be embodied.

An embodiment provides a computer readable storage medium having a computer program stored thereon. When the program is executed by a processor, the multi-label image classification model training method provided in the embodiment as illustrated in FIG. 1 and the multi-label image classification method provided in the embodiment as illustrated in FIG. 5 are implemented.

The readable storage medium may include but is not limited to: a portable disk, a hard disk, a RAM, a ROM, an erasable programmable read-only memory, an optical storage device, a magnetic storage device or any suitable combinations of the above.

In an optional embodiment, the present disclosure can also be implemented in a form of a program product, which includes a program code. When the program product is run on a terminal device, the program code is configured to enable the terminal device to execute the multi-label image classification model training method provided in the embodiment as illustrated in FIG. 1 and the multi-label image classification method provided in the embodiment as illustrated in FIG. 5.

The program code for executing the present disclosure may be written in any combination of one or more programming languages, and may be executed entirely on a user equipment, partially on a user device, as an independent software package, partially on a user equipment and partially on a remote device, or entirely on a remote device.

Although the specific embodiments of the present disclosure are described above, it should be understood by those skilled in the art that this is only for illustration and the scope of the present disclosure is defined by the appended claims. Those skilled in the art may make various changes or modifications to these embodiments without departing from the principles and essence of the present disclosure, but these changes and modifications all fall within the scope of the present disclosure.

**Claims**

1. A multi-label image classification model training method, **characterized by** comprising:

   acquiring a plurality of training samples, wherein the plurality of training samples comprise sample images and label sets corresponding to the sample images, and each of the label sets comprise at least two classification labels;
   acquiring semantic features of the label sets from the classification labels;
   inputting the sample images and the semantic features of the label sets into a multi-label image classification model, wherein the multi-label image classification model acquires visual features from the sample images based on a visual encoder, acquires a correlation between the sample images and the label sets by processing the visual features and the semantic features based on a contrastive learning network, and acquires a prediction result of mapping the sample images to the classification labels by processing the visual features based on a fully connected network;
   constructing a correlation matrix and a unit matrix corresponding to the correlation matrix based on the correlation; and
   calculating a target loss based on the correlation matrix, the unit matrix, the prediction result and the classification labels, and adjusting parameters of the multi-label image classification model based on the target loss until a convergence condition is met.

2. The method according to claim 1, wherein the visual encoder comprises a convolutional neural network and a Transformer network, and said acquiring the visual features from the sample images based on the visual encoder comprises:

   inputting the sample images into the convolutional neural network for feature extraction to acquire a corresponding feature map;
   flattening the feature map to acquire a first feature;
   inputting the first feature into the Transformer network for encoding processing to acquire a second feature; and
   generating the visual features based on the second feature.

3. The method according to claim 1, wherein said acquiring the semantic features of the label sets from the classification labels comprises:

   inputting the classification labels into a semantic encoder for semantic mapping respectively to acquire semantic features of the classification labels;
   acquiring weight parameters of the classification labels; and
   generating the semantic features of the label sets based on the weight parameters and the semantic features of the classification labels.

4. The method according to claim 1, wherein said calculating the target loss based on the correlation matrix, the unit matrix, the prediction result and the classification labels comprises:

   calculating a first loss based on the correlation matrix and the unit matrix;
   calculating a second loss based on the prediction result and the classification labels; and
   determining the target loss based on the first loss and the second loss.

5. The method according to claim 4, wherein the first loss comprises a row loss and a column loss, and said calculating the first loss based on the correlation matrix and the unit matrix comprises:

   substituting the correlation matrix and the unit matrix into a first loss function to acquire the row loss, wherein the first loss function comprises:

$$L_x = \frac{1}{N} \sum_{i=1}^{N} \sum_{j=1}^{N} [e_{ij} log(\sigma(M_{ij})) + (1 - e_{ij}) log(1 - \sigma(M_{ij}))],$$

where $L_x$ is the row loss, $M_{ij}$ is an element in $i$-th row and $j$-th column of the correlation matrix, $e_{ij}$ is an element in $i$-th row and $j$-th column of the unit matrix, $\sigma()$ is an activation function, and $N$ is a number of the sample images; substituting the correlation matrix and the unit matrix into a second loss function to acquire the column loss, wherein the second loss function comprises:

$$L_y = \frac{1}{N}\sum_{i=1}^{N}\sum_{j=1}^{N}[e_{ji}log(\sigma(M_{ji})) + (1 - e_{ji})log(1 - \sigma(M_{ji}))],$$

wherein $L_y$ is the column loss, $M_{ji}$ is an element in j-th row and i-th column of the correlation matrix, $e_{ji}$ is an element in j-th row and i-th column of the unit matrix, $\sigma()$ is the activation function, and N is the number of the sample images; and
determining the first loss based on the row loss and the column loss; and/or,
said calculating a second loss based on the prediction result and the classification labels comprises:
substituting the prediction result and the classification labels into a third loss function to acquire the second loss, wherein the third loss function comprises:

$$L_v = \frac{1}{N}\sum_{k=1}^{N}\sum_{t=1}^{T}[g_{kt}log(\sigma(v_{kt})) + (1 - g_{kt})log(1 - \sigma(v_{kt}))],$$

where $L_v$ is the second loss, $g_{kt}$ is a true label value of a $k$-th sample image mapped to a t-h classification label,

$v_{kt}$ is the prediction result value of the $k$-th sample image mapped to the t-th classification label, $\sigma()$ is the activation function, N is the number of the sample images, and T is a number of the classification labels.

6. A multi-label image classification method, **characterized by** comprising:

acquiring a to-be-classified image and at least two candidate labels;
acquiring semantic features of the at least two candidate labels from the at least two candidate labels;
inputting the to-be-classified image and the semantic features of the at least two candidate labels into a multi-label image classification model for classification processing, to acquire a correlation between the to-be-classified image and the at least two candidate labels, and a prediction result of mapping the to-be-classified image to the at least two candidate labels, wherein the multi-label image classification model is acquired by the method according to any one of claims 1 to 5; and
determining a classification result of the to-be-classified image based on the correlation and the prediction result.

7. A multi-label image classification model training apparatus, **characterized by** comprising:

a first acquisition circuitry configured to acquire a plurality of training samples, wherein the plurality of training samples comprise sample images and label sets corresponding to the sample images, and each of the label sets comprise at least two classification labels;
a second acquisition circuitry configured to acquire semantic features of the label sets from the classification labels;
a first classification circuitry configured to input the sample images and the semantic features of the label sets into a multi-label image classification model, wherein the multi-label image classification model acquires visual features from the sample images based on a visual encoder, acquires a correlation between the sample images and the label sets by processing the visual features and the semantic features based on a contrastive learning network, and acquires a prediction result of mapping the sample images to the classification labels by processing the visual features based on a fully connected network;
a construction circuitry configured to construct a correlation matrix and a unit matrix corresponding to the correlation matrix based on the correlation; and
a training circuitry configured to calculate a target loss based on the correlation matrix, the unit matrix, the prediction result and the classification labels, and adjust parameters of the multi-label image classification model based on the target loss until a convergence condition is met.

8. A multi-label image classification apparatus, **characterized by** comprising:

a third acquisition circuitry configured to acquire a to-be-classified image and at least two candidate labels;
a fourth acquisition circuitry configured to acquire semantic features of the at least two candidate labels from the at least two candidate labels;

a second classification circuitry configured to input the to-be-classified image and the semantic features of the at least two candidate labels into a multi-label image classification model for classification processing, to acquire a correlation between the to-be-classified image and the at least two candidate labels, and a prediction result of mapping the to-be-classified image to the at least two candidate labels, wherein the multi-label image classification model is acquired by the apparatus according to claim 7; and

a classification result determination circuitry configured to determine a classification result of the to-be-classified image based on the correlation and the prediction result.

9. An electronic device comprising a memory, a processor, and a computer program stored in the memory and configured to run on the processor, **characterized in that** when the processor executes the computer program, the method according to any one of claims 1 to 5 or the method according to claim 6 is implemented.

10. A computer readable storage medium having a computer program stored thereon, **characterized in that** when the computer program is executed by a processor, the method according to any one of claims 1 to 5 or the method according to claim 6 is implemented.

a plurality of training samples are acquired $\quad$ S11

semantic features of the label sets are acquired from the classification labels $\quad$ S12

the sample images and the semantic features of the label sets are input into a multi-label image classification model, where the multi-label image classification model acquires visual features from the sample images based on a visual encoder, acquires a correlation between the sample images and the label sets by processing the visual features and the semantic features based on a contrastive learning network, and acquires a prediction result of mapping the sample images to the classification labels by processing the visual features based on a fully connected network $\quad$ S13

a correlation matrix and a unit matrix corresponding to the correlation matrix are constructed based on the correlation $\quad$ S14

a target loss is calculated based on the correlation matrix, the unit matrix, the prediction result and the classification labels, and parameters of the multi-label image classification model are adjusted based on the target loss until a convergence condition is met $\quad$ S15

**FIG. 1**

classification label 1

classification label 2

......

classification label t

→ semantic mapping → t × d → weighted averaging → 1×d

**FIG. 2**

H × W × C

image → convolutional neural network → c × c × d flatten → k × d Transformer → k × d averaging → 1× d

**FIG. 3**

N× d

visual features X

N × d

semantic features Y

⊙

| $x_1 \cdot y_1$ | $x_1 \cdot y_2$ | $\cdots$ | $x_1 \cdot y_N$ |
| $x_2 \cdot y_1$ | $x_2 \cdot y_2$ | $\cdots$ | $x_2 \cdot y_N$ |
| $\vdots$ | $\vdots$ | $\ddots$ | $\vdots$ |
| $x_N \cdot y_1$ | $x_N \cdot y_2$ | $\cdots$ | $x_N \cdot y_N$ |

row loss $L_x$

column loss $L_y$

**FIG. 4**

a to-be-classified image and at least two candidate labels are acquired — S21

semantic features of the at least two candidate labels are acquired from the at least two candidate labels — S22

the to-be-classified image and the semantic features of the at least two candidate labels are input into a multi-label image classification model for classification processing, to acquire a correlation between the to-be-classified image and the at least two candidate labels, and a prediction result of mapping the to-be-classified image to the at least two candidate labels — S23

a classification result of the to-be-classified images is determined based on the correlation and the prediction result — S24

**FIG. 5**

candidate label 1
candidate label 2
......
candidate label T

→ semantic mapping →

$T \times d$

**FIG. 6**

**multi-label image classification model**

image → visual encoder → visual features → fully connected network → correlation → classification result

visual features → contrastive learning network → prediction result → classification result

candidate labels → semantic encoder → semantic features → contrastive learning network

**FIG. 7**

$1 \times d$

visual feature X

$T \times d$

visual feature Y

$\odot$ → | $x_1 \cdot y_1$ | $x_1 \cdot y_2$ | $\cdots$ | $x_1 \cdot y_T$ |

correlation

**FIG. 8**

**multi-label image classification model training apparatus**

first acquisition circuitry —— 11

construction circuitry —— 14

second acquisition circuitry —— 12

training circuitry —— 15

first classification circuitry —— 13

**FIG. 9**

**multi-label image classification apparatus**

third acquisition circuitry —— 21

second classification circuitry —— 23

fourth acquisition circuitry —— 22

classification result determination circuitry —— 24

**FIG. 10**

**FIG. 11**

## INTERNATIONAL SEARCH REPORT

| International application No. |
| --- |
| **PCT/CN2023/090036** |

### A. CLASSIFICATION OF SUBJECT MATTER

G06V10/764(2022.01)i

According to International Patent Classification (IPC) or to both national classification and IPC

### B. FIELDS SEARCHED

Minimum documentation searched (classification system followed by classification symbols)

IPC:G06V

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE, ISI: 多标签, 图像, 分类, 训练, 语义, 特征, 视觉, 对比, 学习, 相关度, 全连接, 预测, 矩阵, 目标, 损失, 参数, multi-label, image, classification, training, visual, comparative, learning, relevancy, full-connection, prediction, matrix, target, loss, parameter

### C. DOCUMENTS CONSIDERED TO BE RELEVANT

| Category* | Citation of document, with indication, where appropriate, of the relevant passages | Relevant to claim No. |
| --- | --- | --- |
| PX | CN 115841596 A (HUAYUAN COMPUTING TECHNOLOGY (SHANGHAI) CO., LTD.) 24 March 2023 (2023-03-24)<br>claims 1-10, and description, paragraphs [0003]-[0053] | 1-10 |
| A | CN 113723513 A (PING AN INTERNATIONAL SMART CITY TECHNOLOGY CO., LTD.) 30 November 2021 (2021-11-30)<br>description, paragraphs [0063]-[0187], and figures 1-2 | 1-10 |
| A | CN 111898703 A (TENCENT TECHNOLOGY (SHENZHEN) CO., LTD.) 06 November 2020 (2020-11-06)<br>entire document | 1-10 |
| A | CN 114299340 A (CTRIP TRAVEL INFORMATION TECHNOLOGY (SHANGHAI) CO., LTD.) 08 April 2022 (2022-04-08)<br>entire document | 1-10 |
| A | CN 114821298 A (DALIAN UNIVERSITY OF TECHNOLOGY) 29 July 2022 (2022-07-29)<br>entire document | 1-10 |

☑ Further documents are listed in the continuation of Box C.    ☑ See patent family annex.

| | |
| --- | --- |
| \*   Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
| --- | --- |
| **19 June 2023** | **23 June 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/090036** |

**C.   DOCUMENTS CONSIDERED TO BE RELEVANT**

| Category* | Citation of document, with indication, where appropriate, of the relevant passages | Relevant to claim No. |
| --- | --- | --- |
| A | US 2021042580 A1 (TENCENT TECHNOLOGY (SHENZHEN) CO., LTD.) 11 February 2021 (2021-02-11)<br>        entire document | 1-10 |

Form PCT/ISA/210 (second sheet) (July 2022)

**INTERNATIONAL SEARCH REPORT**
Information on patent family members

International application No.

**PCT/CN2023/090036**

| Patent document cited in search report | | | Publication date (day/month/year) | Patent family member(s) | | | Publication date (day/month/year) |
|---|---|---|---|---|---|---|---|
| CN | 115841596 | A | 24 March 2023 | None | | | |
| CN | 113723513 | A | 30 November 2021 | None | | | |
| CN | 111898703 | A | 06 November 2020 | None | | | |
| CN | 114299340 | A | 08 April 2022 | None | | | |
| CN | 114821298 | A | 29 July 2022 | None | | | |
| US | 2021042580 | A1 | 11 February 2021 | CN | 110163234 | A | 23 August 2019 |
| | | | | WO | 2020/073951 | A1 | 16 April 2020 |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211626780